# EUROPÄISCHE PATENTSCHRIFT

(11) **EP 1 298 850 B1**
(45) Veröffentlichungstag und Bekanntmachung des Hinweises auf die Patenterteilung: **03.12.2008**
(21) Anmeldenummer: 02017115.3
(22) Anmeldetag: 30.07.2002
(51) Int. Cl.: H04L 12/40, H04L 29/06, B60R 25/00

(54) **Verfahren und Vorrichtung zur Überwachung eines Bussystems und Bussystem**
Method and apparatus for monitoring a bus system and a bus system
Procédé et dispositif de surveillance d'un système de bus et système de bus

(30) Priorität: 26.09.2001 DE 10147446
(43) Veröffentlichungstag der Anmeldung: 02.04.2003
(73) Patentinhaber: ROBERT BOSCH GMBH, 70442 Stuttgart (DE)
(72) Erfinder: Dalakuras, Lambros, 75217 Birkenfeld (DE); Schmidt, Frank, Dr., 71229 Leonberg (DE); Hirt, Juergen, 71292 Friolzheim (DE)

(56) Entgegenhaltungen:
- EP-A- 0 704 351
- DE-A1- 19 960 959
- DE-C2- 4 301 436
- GB-A- 2 351 588

## Beschreibung

### Stand der Technik

Die Erfindung betrifft ein Verfahren und eine Vorrichtung zur Überwachung eines Bussystems mit wenigstens zwei Teilnehmern sowie ein entsprechendes Bussystem gemäß den unabhängigen Ansprüchen.

Die Vernetzung von Steuergeräten, Sensorik und Aktuatorik mit Hilfe eines Kommunikationssystems, also eines Bussystems, hat in den letzten Jahren beim Bau von modernen Kraftfahrzeugen oder auch im Maschinenbau, insbesondere im Werkzeugmaschinenbereich und in der Automatisierung drastisch zugenommen. Synergieffekte durch Verteilung von Funktionen auf mehrere Steuergeräte können dabei erzielt werden. Man spricht dabei von verteilten Systemen. Die Kommunikation zwischen verschiedenen Teilnehmern solcher verteilter Systeme findet mehr und mehr über einen Bus bzw. ein Bussystem statt. Der Kommunikationsverkehr auf dem Bussystem, Zugriffs- und Empfangsmechanismen sowie Fehlerbehandlungen werden über ein Protokoll geregelt.

Als Protokoll im Kfz-Bereich etabliert ist der CAN (controller area network). Dieses ist ein ereignisgesteuertes Protokoll; d. h. Protokollaktivitäten wie das Senden einer Nachricht werden durch Ereignisse iniziiert, die ihren Ursprung außerhalb des Kommunikationssystems haben. Der eindeutige Zugang zum Kommunikationssystem bzw. Bussystem wird über eine prioritätsbasierte Bitarbitrierung gelöst. Eine Voraussetzung dafür ist, dass jeder Nachricht eine eindeutige Priorität entsprechend des Identifikationskennzeichens zugewiesen ist. Dabei ist das Identifikationskennzeichen (ID) beim CAN eindeutig dem Nachrichteninhalt einer Datenübertragung zugeordnet. Das CAN-Protokoll ist sehr flexibel, wodurch ein Hinzufügen weiterer Knoten und Nachrichten damit problemlos möglich ist, solange es noch freie Prioritäten, eben genannte Identifikationskennzeichen oder message identifier (ID) gibt. Die Sammlung aller im Netzwerk zu sendenden Nachrichten mit Prioritäten und deren Senderknoten sowie möglicherweise Empfangsknoten sind in einer Liste, der sogenannten Kommunikationsmatrix abgelegt. Häufig werden CAN-Systeme derart konzipiert, dass eine eindeutige Zuordnung der Identifikationskennzeichen zu bestimmten vorgebbaren Teilnehmern gegeben ist.

Als weiteres Protokoll auf einem Bussystem ist die bitsynchrone Schnittstelle BSS bekannt. Sie findet beispielsweise Anwendung als Kommunikationsprotokoll zwischen Steuergerät und Generatorregler zur Sollwertregelung und Zustandsanzeige sowie als Diagnoseschnittstelle für Kfz-Werkstätten usw. Der Aufbau des BSS-Protokolls entspricht dem eines Master-Slave-Protokolis. Ein Master kommuniziert mit bis zu maximal 8 Slaves, die über eine lineare Busleitung verbunden sind. Als Übertragungsmedium für die pulsweitenmodullierten Bits dient eine ungeschirmte physikalische Eindrahtleitung. Der Master sendet permanent Synchronisationsimpulse, die durch Informationsbits überschrieben werden können und er ist als einziger Busteilnehmer in der Lage, einen Datenaustausch zu initiieren. Der Master kann über eine Botschaft immer nur mit einem Slave kommunizieren. Ein Botschaftstelegramm besteht beim BSS-Protokoll z.B. aus 3 Synchronisationsbits und 19 Informationsbits. Vor jeder Botschaft müssen z.B. mindestens 3 Synchronisationsbits gesendet werden, um ein Synchronisieren des Slaves zu ermöglichen. Diese Synchronisationsbits werden somit vom Master als Initiator der Datenübertragung im Rahmen der Datenübertragung auf dem Bussystem übermittelt.

Wie BSS, so ist LIN (local interconnect network) ein Master-Slave-Bus, dessen Teilnehmer über eine logische Busleitung verbunden sind. Jedem Bus gehören maximal ein Master und bis zu 64 Slaves an. Als Übertragungsmedium dient eine ungeschirmte physikalische Eindrahtleitung. Das LIN-Protokoll teilt den Sende- und Empfangsprozess in zwei Tasks ein. Die Mastertask beinhaltet die Synchronisation und Adressierung, und die Slavetask beinhaltet die Daten. Beides - Mastertask und Slavetask - sind in einem Nachrichtenrahmen, dem sogenannten MessageFrame zusammengefasst. Ein Master kann sowohl die Mastertask als auch die Slavetask ausführen. Jede Datenübertragung besteht aus einem Botschaftsrahmen (MessageFrame), in dem sowohl die Synchronisations- als auch die Dateninformationen übertragen werden. Die einzelnen Abschnitte der Botschaft, die sogenannten Byte-Felder, sind gleich dem Format einer seriellen Schnittstelle bei 8N1-Übertragung. D. h. 8 Datenbits, kein Paritätsbit und 1 Stopbit. Zu Beginn jeder Botschaft oder Nachricht sendet der Master eine Synchronisationsunterbrechung als Synchronisationssignal, den sogenannten SynchBreak, um die Slaves aus einem möglichen Ruhezustand zu holen und Synchronisation zu ermöglichen. Dabei besteht der SynchBreak aus zwei verschiedenen Teilen: einem ersten Teil, einem busdominanten Signal von bestimmter, insbesondere 13 Bit langer Dauer. Der zweite Teil entspricht einem busrezessiven Signal von bestimmter, insbesondere 1-Bit-Dauer.

So wie die genannten Beispiele gibt es eine Vielzahl von Bussystemen, die als Kommunikationsverbindung zwischen Teilnehmern insbesondere in verteilten Systemen eingesetzt werden können. Dabei gewinnt der Schutz vor unbefugtem Zugriff auf diese Systeme immer mehr an Bedeutung. Bei heutigen Bussystemen im Kraftfahrzeug wird ein Großteil der Daten ungeschützt übertragen. Wird die Busleitung von einem unberechtigten Nutzer angeschlossen, so kann er Befehle versenden, die beispielsweise das Entriegeln der Zentralverriegelung und somit ein Aufsperren des Fahrzeugs auslösen. Generell ist solch unbefugter Zugriff im Rahmen eines Bussystems mit hohem Gefahrenpotential, beispielsweise in der Automatisierung oder auch im Rahmen des Diebstahlschutzes bei Kraftfahrzeugen verbunden.

Um dennoch einen gewissen Schutz vor unbefugtem Zugriff zu gewährleisten, wird die Busleitung nur an solchen Stellen verlegt, wo es für einen Eindringling besonders schwer ist, die Busleitung anzuzapfen. Bei besonders kritischen Applikationen, z. B. einem Motorstarten im Kraftfahrzeug, werden in der Regel die Daten zusätzlich verschlüsselt gesendet. Die Verschlüsselung der Daten ist oft mit einem sehr hohen Aufwand verbunden. Dennoch kann ein Großteil der verwendeten Algorithmen mit gewissem Aufwand und Fachwissen von einem unberechtigten Nutzer entschlüsselt werden.

Weiterhin zeigt die EP 0 704 351 A1 ein Überwachungsverfahren gegen unerlaubten Zugriff, in welchem Teilnehmer eines elektrischen Systems durch Identifikationscodes eindeutig identifizierbar sind. Wird durch Vergleich der Identifikationscodes erkannt dass ein Zugriff erfolgt macht der betroffene Teilnehmer seine eigene Funktion ungültig. Der Benutzer wird darüber umgehend informiert.

Die GB 2 351 588 A zeigt eine Sicherheitseinrichtung und ein entsprechendes Verfahren in netzwerkverbundenen Umgebungen. Dabei werden Gruppen erlaubter Operationen und Funktionen gebildet und geschützten Quellen zugeordnet. Durch eine Gatewayfunktionalität bzw. ein entsprechendes Bauteil wird sichergestellt, das keine unautorisierten Funktionen von außerhalb initiiert werden können.

Die DE 43 01 436 C2 zeigt ein Sicherungssystem zur Sicherung eines Fahrzeugs gegen nicht autorisierte Benutzung. Dabei sind Zustandsmelder vorgesehen, die zu diesem Zweck codierte Signale über ein Netzwerk übermitteln. Anhand der Überprüfung der korrekten Form der codierten Signale der Zustandsmelder wird eine nicht autorisierte Benutzung erkannt.

Die De 199 60 959 A1 schließlich offenbart eine Vorrichtung zum manipulationssichern Austausch von Daten in einem Fahrzeug. Dabei werden Daten, die von einem in ein anderes Bussystem geleitet werden, in einem Gateway anhand zulässiger Identifier überprüft.

So stellt sich die Aufgabe, ein verbessertes Verfahren und eine Vorrichtung bzw. ein entsprechendes Bussystem bereitzustellen, welches vor solch unbefugtem Zugriff schützt.

### Vorteile der Erfindung

Diese Aufgabe wird gelöst durch ein Verfahren nach Anspruch 1 und eine Vorrichtung nach Anspruch 6 zur Überwachung eines Bussystems sowie ein entsprechendes Bussystem mit wenigstens zwei Teilnehmern nach Anspruch 7.

Damit können vorteilhafter Weise Bussysteme vor unbefugtem Zugriff geschützt werden. Dabei ist das Verfahren, die Vorrichtung sowie das Bussystem vorteilhafter Weise nicht an ein spezifisches Bussystem gebunden; ebensowenig, wie ein bestimmtes Buszugriffsverfahren, wie bei einem Master-Slaveoder einem Multimastersystem. Ebenso ist ein Einsatz auch dann möglich, wenn bereits Daten verschlüsselt übertragen werden.

Vorteilhafter Weise wird keine zusätzliche Hardware benötigt, um das Verfahren zu realisieren. Weiterhin von Vorteil ist, dass sich damit die Sicherheit vor unbefugtem Zugriff erhöht, eine höhere Flexibilität bei der Auslegung verteilter Applikationen möglich wird und keine oder nur sehr geringe zusätzliche Kosten entstehen. Eine zusätzliche Kostenersparnis ergibt sich auch daraus, dass abhängig von der Applikation und der Bustopologie auf eine zusätzliche Verschlüsselung verzichtet werden kann und somit keine Rechenleistung für Verschlüsselungsargorithmen vorgehalten werden muss.

Weiterhin ist das Verfahren und die Vorrichtung sowie das Bussystem einfach handhabbar und kann auch in bereits bestehende Bussysteme vorteilhafter Weise einfach integriert werden.

Damit ist es zweckmäßiger Weise möglich, wie aus technischen und kommerziellen Gesichtspunkten wünschenswert, weitere Systeme zu vernetzen, wie beispielsweise in Kraftfahrzeugen eine integrierte Elektronik im Außenspiegel mit weiteren Komponenten wie einer Schlosselektronik, einem Komfortsteuergerät usw., um zu einer Kostenreduktion des Gesamtsystems beizutragen.

Um eine Ausführung der zu übertragenden Daten zu verhindern, werden solche Maßnahmen eingeleitet, die verhindern, dass die Datenübertragung auf dem Bussystem vollständig ausgeführt wird. Dabei ist es zweckmäßig, eine vollständige Datenübertragung dadurch zu verhindern, dass die zu übertragenden Daten durch den autorisierten Teilnehmer wenigstens teilweise zerstört werden, beispielsweise indem die Daten mit einem busdominanten Signal überschrieben werden oder das Bussystem für eine bestimmte, vorgebbare Dauer auf Masse gezogen wird.

In einer zweckmäßigen Ausgestaltung erfolgt die Überwachung der Datenübertragung durch Vergleich der Kennzeichen nur bei vorgegebenen bzw. vorgebbaren Ereignissen durch den wenigstens einen autorisierten Teilnehmer.

Weiterhin von Vorteil ist, dass eine Ausführung der zu übertragenden Daten dadurch verhindert wird, dass die zu übertragenden Daten derart durch den autorisierten Teilnehmer als ungültig gekennzeichnet werden, dass ein Teilnehmer als Empfänger der Daten diese als ungültig erkennt und verwirft.

In einer besonderen Ausgestaltung ist jeder Teilnehmer des Bussystems als autorisierter Teilnehmer ausgebildet.

In einer vorteilhaften Ausgestaltung der Erfindung handelt es sich bei dem Bussystem um eine LIN-Bussystem, wobei als autorisierter Teilnehmer derjenige Teilnehmer vorgesehen ist, welcher auch die Datenübertragung auslöst, wobei dann als Kennzeichen beispielsweise ein Synchronisationssignal, ein SynchBreak eines als LIN-Master ausgebildeten Teilnehmers verwendet wird und der als LIN-Master ausgebildete Teilnehmer auch als autorisierter Teilnehmer ausgebildet ist.

In einer weiteren vorteilhaften Ausgestaltung handelt es sich bei dem Bussystem um ein CAN-Bussystem, wobei das Identifikationskennzeichen der CAN-Bus-Datenübertragung als Kennzeichen verwendet wird, wobei in diesem speziellen CAN-Fall das Identifikationskennzeichen eindeutig einem Teilnehmer derart zugeordnet ist, dass nur dieser Teilnehmer den zu diesem Identifikationskennzeichen gehörenden Dateninhalt überträgt, wobei dann ein Vergleich der Identifikationskennzeichen erfolgen kann.

In einer weiteren vorteilhaften Ausgestaltung handelt es sich bei dem Bussystem um ein BSS-Bussystem, wobei als autorisierter Teilnehmer derjenige Teilnehmer vorgesehen ist, der auch die Datenübertragung auslöst und als Kennzeichen beispielsweise ein Synchronisationsbitsignal des als BSS-Master ausgebildeten Teilnehmers verwendet wird, wobei der als BSS-Master ausgebildete Teilnehmer ebenfalls als autorisierter Teilnehmer ausgebildet ist.

Mit der Erfindung und der erfindungsgemäßen Ausgestaltung ist es somit möglich, die Situation, dass sich ein unberechtigter Nutzer Zugang zu den Busleitungen im Bussystem verschafft, um bestimmte Funktionen auszulösen, also ein unbefugter Zugriff verhindert werden kann.

Weitere Vorteile und vorteilhafte Ausgestaltungen ergeben sich aus der Beschreibung und den Merkmalen der Ansprüche.

### Zeichnungen

Die Erfindung wird im Weiteren anhand der in der Zeichnung dargestellten Figuren näher erläutert.

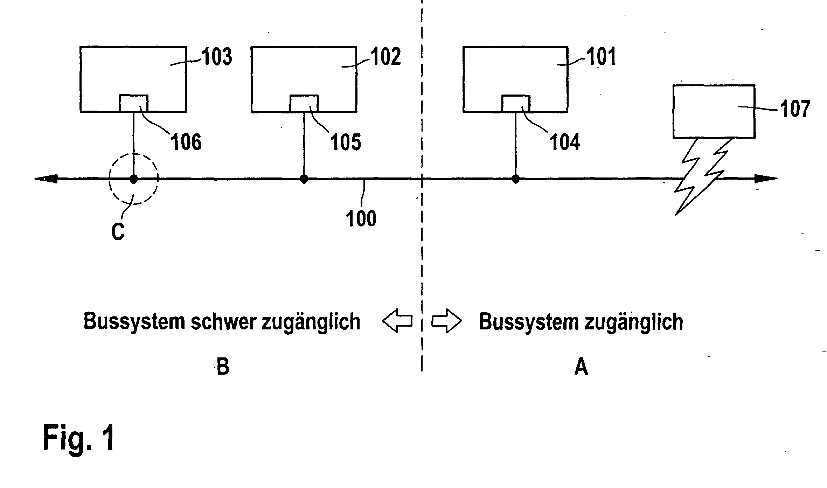

Dabei zeigt Figur 1 ein Bussystem, auf welches ein unbefugter Zugriff durchgeführt wird.

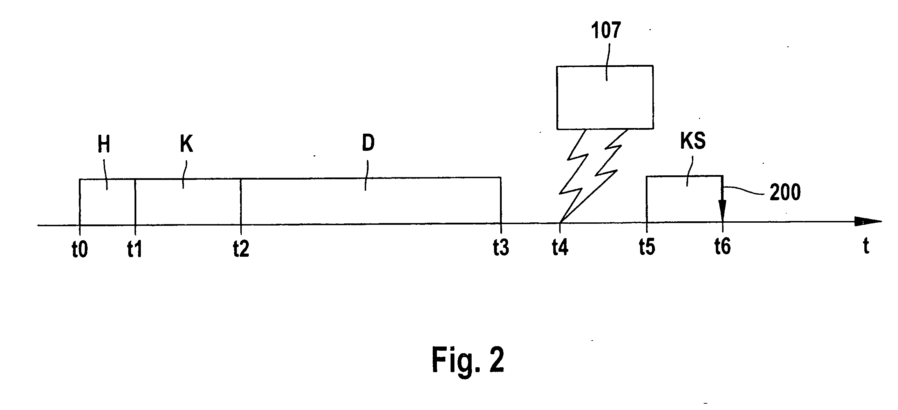

Figur 2 zeigt schematisch eine Datenübertragung auf dem Bussystem.

### Beschreibung der Ausführungsbeispiele

Figur 1 zeigt dazu ein Bussystem 100 mit Busteilnehmern 101, 102 und 103. Die Busteilnehmer 101 bis 103 sind über Busschnittstellen 104 bis 106 mit dem Bus 100 verbunden. Dabei ist das Bussystem in zwei Bereiche eingeteilt: einen Bereich A, in dem das Bussystem unbefugtem Zugriff zugänglich ist, insbesondere durch zusätzliche Maßnahmen wie beispielsweise das Abreißen eines Außenspiegels usw., und einen Bereich B, in dem das Bussystem schwer zugänglich ist, insbesondere z. B. das Fahrzeuginnere.

Mit Element 107 ist ein unbefugter Buszugriff beispielsweise durch Anbindung eines Laptops an die Busleitung dargestellt. In diesem Szenario ist beispielsweise mit 103 für eine LINoder BSS-Anwendung der Masterteilnehmer dargestellt.

Im dargestellten Bussystem sind beispielsweise die Teilnehmer 101 und 103 autorisierte Teilnehmer. Aber auch die Vorgabe aller Teilnehmer bzw. Knoten 101 bis 103 usw. als autorisierte Teilnehmer ist möglich. Autorisierter Teilnehmer bedeutet, dass dieser Teilnehmer das Bussystem derart überwacht, dass der Busverkehr, also die Datenübertragung auf dem Bussystem, abgehört wird und der Teilnehmer entsprechende Massnahmen zur Reaktion auf einen Unbefugten Zugriff einleiten kann.

Autorisierte Teilnehmer führen daraufhin einen Vergleich eines Kennzeichens innerhalb der Datenübertragung mit wenigstens einem diesem Teilnehmer vorgegebenen Kennzeichen durch. Aus der eindeutigen Kennzeichenvorgabe eines oder mehrerer Kennzeichen für jeden Teilnehmer ergibt sich dann, dass, wenn der autorisierte Teilnehmer eine Datenübertragung nicht selbst initiiert hat und eine Gleichheit bei der Kennzeichnung festgestellt wird, ein unbefugter Buszugriff vorliegen muss und entsprechende Maßnahmen eingeleitet werden. Diese autorisierten Teilnehmer können entweder ständig den Busverkehr mitverfolgen oder können auch nur bei bestimmten Ereignissen die Busnachrichten aufnehmen. Solche Ereignisse sind beispielsweise ein Wake-up von Steuergeräten bzw. Teilnehmern aus einem Sleep-, also Schlaf- oder Powerdown-Modus oder beispielsweise der Beginn oder der Ablauf selber im Steuergerätenachlauf bzw. Systemnachlauf usw.

Einem solchermaßen autorisierten Teilnehmer sind bestimmte Sendebotschaften bzw. die entsprechenden Kennzeichen auf geeignete Art und Weise eindeutig zugewiesen.

Dabei kann ein Teilnehmer, wie beispielsweise bei einem CAN-Bussystem mehrere Kennzeichen verwalten bzw. Nachrichten mit diesen Kennzeichen. Jedes dieser Kennzeichen muss aber eindeutig einem Teilnehmer zuordenbar sein. Solche Kennzeichen sind beispielsweise die Identifier oder Identifikationskennzeichen beim CAN- oder LIN-Bus, der SynchBreak beim LIN-Bus oder auch die Synchronisationskennzeichen, beispielsweise 3-Sync-Bits oder auch nur eines davon beim BSS-Bus.

Dieser Botschaftsaufbau ist in Figur 2 beschrieben. Dabei erfolgt beispielsweise eine Datenübertragung des autorisierten Teilnehmers 101 auf dem Bussystem. Dabei wird der eigentliche Dateninhalt von t2 bis t3 übertragen (D) und ein Kennzeichen K, beispielsweise von t1 bis t2 vor dem eigentlichen Dateninhalt.

Weiterhin vorhanden und optional ist ein Header H der Datenübertragung von t0 bis t1, welcher z. B. bei CAN-Bus-Übertragungen Synchronisationsbits und Ähnliches umfasst. Parity- und Check-Summen, Bits und Ähnliches sind in der Darstellung in Figur 2 im Block D enthalten und nicht explizit dargestellt.

Zum Zeitpunkt t4 wird nun beispielsweise ein unbefugter Buszugriff, dargestellt durch Element 107, initiiert. Dabei wird beispielsweise der autorisierte Teilnehmer 101 als Busteilnehmer simuliert. Es wird von t5 bis t6 ein simuliertes Kennzeichen KS, das in diesem Fall einem Kennzeichen des autorisierten Teilnehmers 101 entspricht, über den Bus versandt. Spätestens zum Zeitpunkt t6 erkennt der autorisierte Teilnehmer 101, dass ein Kennzeichen, das ihm zugeordnet ist, über den Bus übertragen wird, obwohl der autorisierte Teilnehmer 101 selbst keine Datenübertragung initiiert hat. Daraufhin leitet der autorisierte Teilnehmer 101 seinerseits Maßnahmen ein, um eine Ausführung der Daten des unbefugten Zugriffs bzw. die vollständige Übertragung dieser Daten zu verhindern. Dies kann beispielsweise durch ein dominantes Überschreiben der Daten oder ein Ziehen des Bussystems auf Massepotential, dargestellt in 200, geschehen, wodurch sämtliche Folgedaten vernichtet werden. Gleichermaßen ist es möglich, an ein unbefugtes Datenpaket derart Informationen in Bit- oder Byte-Form anzuhängen, um dieses für einen möglichen Empfänger ungültig zu machen, so dass dieser das Datenpaket bzw. die daraus sich ergebenden Funktionen nicht ausführt, sondern die Daten aufgrund der angehängten oder veränderten Bits oder Bytes als ungültig verwirft bzw. löscht.

Wird also durch einen unberechtigten Nutzer eine Botschaft gesendet, welche ein autorisierter Teilnehmer als eigene Sendebotschaft identifiziert, so werden vom autorisierten Knoten entsprechende Maßnahmen eingeleitet, um die Botschaft für den Empfänger als ungültig zu kennzeichnen. Idealerweise zerstört der autorisierte Teilnehmer die Botschaft, indem er die Daten entweder, wie gesagt, dominant überschreibt oder auch den Bus auf Masse zieht, so dass die Daten erst gar nicht beim Empfänger ankommen. Ist ein solches dominantes Überschreiben auf Grund des Buszugriffverfahrens nicht möglich, so kann beispielsweise der autorisierte Knoten dem Empfänger unmittelbar mitteilen, dass es sich um eine ungültige Botschaft handelt. Alternativ sind auch andere, weitere Maßnahmen möglich, wie beispielsweise das Senden von error frames, das Sperren von Funktionen oder das Einstellen des Busverkehrs usw. durch den autorisierten, den Busverkehr überwachenden Knoten.

In einem konkreten Ausführungsbeispiel liegt beispielsweise folgender Ablauf zu Grunde:

Ein unberechtigter Nutzer versucht unbefugt auf dem Datenbus eine Nachricht zu senden, indem er an die Busleitungen, wie in Figur 1 mit Element 107 dargestellt, beispielsweise einen Laptop oder ein andersartiges Gerät zur Nachbildung der Buskommunikation anschließt. Durch den unbefugten Teilnehmer wird zunächst ein Kennzeichen, beispielsweise die Botschafts-ID oder auch ein Synchronisationssignal, wie der SynchBreak des LIN-Busses oder die Synchronisation des BSS-Busses an den Teilnehmer, beispielsweise 102, gesendet. Steuereinheit bzw. Busteilnehmer 103, insbesondere im Beispiel einer Master-Slave-Topologie als LIN- oder BSS-Master ausgebildet, erkennt entweder an der Botschafts-ID oder im Falle eines LIN-Busses am SynchBreak, dass diese Nachricht eigentlich nur von ihm selber gesendet werden darf.

Die Steuereinheit 103, insbesondere der LIN-Master, zieht daraufhin den Bus 100 hier dominant auf Masse, so dass die Befehlsdaten, die der unberechtigte Nutzer sendet, zerstört werden.

Dadurch wird die Nachricht bzw. die Datenübertragung von der Steuereinheit 102 bzw. dem Teilnehmer 102 als ungültig erkannt. Um ein solches dominantes Überschreiben der Datenübertragung durch den Teilnehmer 103 zu verhindern, müsste der Eindringling zusätzlich die Busleitung am Punkt C trennen. Aufgrund der räumlichen Gegebenheiten ist dies jedoch nahezu unmöglich. Wobei hier in diesem Beispiel ein dominantes Signal mit dem Massepotential zusammenfällt, was nicht zwangsläufig der Fall sein muß.

In einer besonders sicheren Variante ist jeder Teilnehmer des Bussystems als autorisierter Teilnehmer ausgebildet. Dabei müssen die Daten nicht vollständig zerstört werden, sondern eine teilweise Vernichtung der Daten oder ein Überschreiben dieser Daten, um diese ungültig oder nicht mehr lesbar zu machen, reicht aus. Ein Kennzeichen im jeweiligen Bussystem wird dabei so gewählt, dass die Reaktion durch den Busteilnehmer, insbesondere durch dominantes Signal, auf dem entsprechenden Bussystem rechtzeitig vor Übermittlung der Daten bzw. so möglich ist, dass eine Ausführung der Daten, also die Funktion, verhindert werden kann.

Damit ist eine einfache und kostengünstige Lösung geschaffen, die einen hohen Sicherheitsstandard, insbesondere bei verteilten Applikationen mit sicherheitsrelevanten Daten für alle Bussysteme, insbesondere Multiplexsysteme, nicht nur im Kfz-Bereich, sondern auch in der Automatisierung und im Maschinenbau ermöglicht.

## Patentansprüche

1. Verfahren zur Überwachung eines Bussystems mit wenigstens zwei Teilnehmern, wobei die wenigstens zwei Teilnehmern des Bussystems als autorisierte Teilnehmer bezüglich bestimmter Daten ausgebildet sind und die Datenübertragung auf dem Bussystem durch wenigstens einen ersten autorisierten Teilnehmer überwacht wird, wobei bei jeder Datenübertragung auf dem Bussystem ein Kennzeichen übertragen wird, wobei das Kennzeichen eindeutig einem Teilnehmer zugeordnet werden kann, wobei der wenigstens eine erste autorisierte Teilnehmer das Kennzeichen mit einem vorgegebenen Kennzeichen vergleicht und bei Gleichheit beider Kennzeichen Maßnahmen einleitet, um eine Ausführung der zu übertragenden Daten zu verhindern, wenn die Datenübertragung durch einen anderen als den für diese Daten autorisierten Teilnehmer initiiert wird, **dadurch gekennzeichnet, dass** der wenigstens erste autorisierte Teilnehmer eine vollständige Datenübertragung **dadurch** verhindert, dass die zu übertragenden Daten durch ihn wenigstens teilweise zerstört werden können, indem die Daten mit einem für das Bussystem dominanten Datensignal überschrieben werden.

2. Verfahren nach Anspruch 1, **dadurch gekennzeichnet, dass** als Maßnahmen, um eine Ausführung der zu übertragenden Daten zu verhindern solche Maßnahmen eingeleitet werden, um zu verhindern, dass die Datenübertragung auf dem Bussystem vollständig ausgeführt wird.

3. Verfahren nach Anspruch 1, **dadurch gekennzeichnet, dass** die Überwachung der Datenübertragung durch Vergleich der Kennzeichen nur bei vorgegebenen Ereignissen durch den wenigstens einen autorisierten Teilnehmer durchgeführt wird.

4. Verfahren nach Anspruch 1, **dadurch gekennzeichnet, dass** eine Ausführung der zu übertragenden Daten **dadurch** verhindert wird, dass die zu übertragenden Daten derart durch den autorisierten Teilnehmer als ungültig **gekennzeichnet** werden, dass ein Teilnehmer als Empfänger der Daten, diese als ungültig erkennt und verwirft.

5. Verfahren nach Anspruch 1, **dadurch gekennzeichnet, dass** jeder Teilnehmer als autorisierter Teilnehmer ausgebildet ist.

6. Vorrichtung zur Überwachung eines Bussystems, wobei das Bussystem wenigstens zwei Teilnehmer enthält und von den wenigstens zwei Teilnehmern wenigstens ein Teilnehmer als autorisierter Teilnehmer ausgebildet ist und die Datenübertragung auf dem Bussystem überwacht, wobei erste Mittel enthalten sind durch welche bei jeder Datenübertragung auf dem Bussystem ein Kennzeichen übertragen wird, wobei das Kennzeichen eindeutig einem Teilnehmer zugeordnet werden kann, wobei der wenigstens eine autorisierte Teilnehmer zweite Mittel enthält, welche das Kennzeichen mit einem vorgegebenen Kennzeichen vergleichen und bei Gleichheit beider Kennzeichen Maßnahmen einleiten, um eine Ausführung der zu übertragenden Daten zu verhindern, wenn die Datenübertragung durch einen anderen als den wenigstens einen autorisierten Teilnehmer initiiert wird, **dadurch gekennzeichnet, dass** der erste autorisierte Teilnehmer derart ausgebildet ist, dass er eine vollständige Datenübertragung **dadurch** verhindert, dass die zu übertragenden Daten durch ihn wenigstens teilweise zerstört werden können, indem die Daten mit einem für das Bussystem dominanten Datensignal überschrieben werden.

7. Bussystem mit Überwachungsmitteln zur Überwachung des Bussystems, wobei das Bussystem wenigstens zwei Teilnehmer enthält und von den wenigstens zwei Teilnehmern wenigstens ein Teilnehmer als autorisierter Teilnehmer ausgebildet ist und die Datenübertragung auf dem Bussystem überwacht, wobei erste Mittel enthalten sind durch welche bei jeder Datenübertragung auf dem Bussystem ein Kennzeichen übertragen wird, wobei das Kennzeichen eindeutig einem Teilnehmer zugeordnet werden kann, wobei der wenigstens eine autorisierte Teilnehmer zweite Mittel enthält, welche das Kennzeichen mit einem vorgegebenen Kennzeichen vergleichen und bei Gleichheit beider Kennzeichen Maßnahmen einleiten, um eine Ausführung der zu übertragenden Daten zu verhindern, wenn die Datenübertragung durch einen anderen als den wenigstens einen autorisierten Teilnehmer initiiert wird, **dadurch gekennzeichnet, dass** der erste autorisierte Teilnehmer derart ausgebildet ist, dass er eine vollständige Datenübertragung **dadurch** verhindert, dass die zu übertragenden Daten durch ihn wenigstens teilweise zerstört werden können, indem die Daten mit einem für das Bussystem dominanten Datensignal überschrieben werden.

8. Verfahren oder Vorrichtung nach Anspruch 1 oder 6 oder 7, **dadurch gekennzeichnet, dass** es sich bei dem Bussystem um ein LIN-Bussystem handelt, wobei als erster autorisierter Teilnehmer der Master-Teilnehmer vorgesehen ist.

9. Verfahren oder Vorrichtung nach Anspruch 8, **dadurch gekennzeichnet, dass** als Kennzeichen ein Synchronisationsbitsignal (SynchBreak) eines als LIN-Master ausgebildeten Teilnehmers verwendet wird, wobei der als LIN-Master ausgebildete Teilnehmer als autorisierter Teilnehmer ausgebildet ist.

10. Verfahren oder Vorrichtung nach Anspruch 1 oder 6 oder 7, **dadurch gekennzeichnet, dass** es sich bei dem Bussystem um ein CAN-Bussystem handelt, wobei jeder Teilnehmer vor einer Datenübertragung ein Identifikationskennzeichen überträgt und jedem Teilnehmer wenigstens ein Identifikationskennzeichen zugeordnet ist, wobei der wenigstens eine autorisierte Teilnehmer das wenigstens eine ihm zugeordnete Identifikationskennzeichen mit dem auf dem Bussystem übertragenen Identifikationskennzeichen vergleicht.

11. Verfahren oder Vorrichtung nach Anspruch 1 oder 6 oder 7, **dadurch gekennzeichnet, dass** es sich bei dem Bussystem um ein System entsprechend der Bitsynchronen Schnittstelle (BSS) handelt.

12. Verfahren oder Vorrichtung nach Anspruch 8 oder 11, **dadurch gekennzeichnet, dass** als Kennzeichen wenigstens ein Synchronisationsbitsignal eines als Master ausgebildeten Teilnehmers verwendet wird, wobei der als Master ausgebildete Teilnehmer als autorisierter Teilnehmer ausgebildet ist.

## Claims

1. Method for monitoring a bus system having at least two subscribers, the at least two subscribers of the bus system being in the form of authorized subscribers with regard to particular data and the transmission of data on the bus system being monitored by at least one first authorized subscriber, an identifier being transmitted with each transmission of data on the bus system, the identifier being able to be uniquely assigned to a subscriber, the at least one first authorized subscriber comparing the identifier with a predefined identifier and, if the two identifiers are the same, initiating measures in order to prevent the data to be transmitted from being executed if the transmission of data is initiated by a subscriber other than the subscriber authorized for these data, **characterized in that** the at least first authorized subscriber prevents complete transmission of data by virtue of the fact that the data to be transmitted can be at least partially destroyed by it by overwriting the data with a data signal which is dominant for the bus system.

2. Method according to Claim 1, **characterized in that** the measures initiated in order to prevent the data to be transmitted from being executed are those measures for preventing the complete transmission of data on the bus system.

3. Method according to Claim 1, **characterized in that** the transmission of data is monitored by the at least one authorized subscriber by comparing the identifiers only in the case of predefined events.

4. Method according to Claim 1, **characterized in that** execution of the data to be transmitted is prevented by the authorized subscriber identifying the data to be transmitted as invalid in such a manner that a subscriber, as recipient of the data, identifies the latter as being invalid and discards them.

5. Method according to Claim 1, **characterized in that** each subscriber is in the form of an authorized subscriber.

6. Apparatus for monitoring a bus system, the bus system containing at least two subscribers and at least one subscriber of the at least two subscribers being in the form of an authorized subscriber and monitoring the transmission of data on the bus system, first means which transmit an identifier with each transmission of data on the bus system being included, the identifier being able to be uniquely assigned to a subscriber, the at least one authorized subscriber containing second means which compare the identifier with a predefined identifier and, if the two identifiers are the same, initiate measures in order to prevent the data to be transmitted from being executed if the transmission of data is initiated by a subscriber other than the at least one authorized subscriber, **characterized in that** the first authorized subscriber is designed in such a manner that it prevents complete transmission of data by virtue of the fact that the data to be transmitted can be at least partially destroyed by it by overwriting the data with a data signal which is dominant for the bus system.

7. Bus system having monitoring means for monitoring the bus system, the bus system containing at least two subscribers and at least one subscriber of the at least two subscribers being in the form of an authorized subscriber and monitoring the transmission of data on the bus system, first means which transmit an identifier with each transmission of data on the bus system being included, the identifier being able to be uniquely assigned to a subscriber, the at least one authorized subscriber containing second means which compare the identifier with a predefined identifier and, if the two identifiers are the same, initiate measures in order to prevent the data to be transmitted from being executed if the transmission of data is initiated by a subscriber other than the at least one authorized subscriber, **characterized in that** the first authorized subscriber is designed in such a manner that it prevents complete transmission of data by virtue of the fact that the data to be transmitted can be at least partially destroyed by it by overwriting the data with a data signal which is dominant for the bus system.

8. Method or apparatus according to Claim 1 or 6 or 7, **characterized in that** the bus system is an LIN bus system, the master subscriber being provided as the first authorized subscriber.

9. Method or apparatus according to Claim 8,
**characterized in that** a synchronization bit signal (SynchBreak) of a subscriber in the form of an LIN master is used as the identifier, the subscriber in the form of an LIN master being in the form of an authorized subscriber.

10. Method or apparatus according to Claim 1 or 6 or 7, **characterized in that** the bus system is a CAN bus system, each subscriber transmitting an identifier before transmitting data and each subscriber being assigned at least one identifier, the at least one authorized subscriber comparing the at least one identifier assigned to it with the identifier transmitted on the bus system.

11. Method or apparatus according to Claim 1 or 6 or 7, **characterized in that** the bus system is a system according to the bit-synchronous interface (BSS).

12. Method or apparatus according to Claim 8 or 11, **characterized in that** at least one synchronization bit signal of a subscriber in the form of a master is used as the identifier, the subscriber in the form of a master being in the form of an authorized subscriber.

## Revendications

1. Procédé de surveillance d'un système de bus comportant au moins deux participants,
selon lequel au moins les deux participants au système de bus sont réalisés sous la forme de participants autorisés pour certaines données et la transmission des données par le système de bus est surveillée par au moins un premier participant autorisé, et
à chaque transmission de données par le système de bus, on transmet un signe caractéristique,
le signe caractéristique pouvant être associé de manière univoque à un participant,
au moins un premier participant autorisé comparant le signe caractéristique à un signe caractéristique prédéfini et en cas d'identité des deux signes caractéristiques, il prend des mesures pour éviter l'exécution des données à transmettre si la transmission des données est initiée par un participant autre que le participant autorisé pour ces données,
**caractérisé en ce qu'**
au moins le premier participant autorisé interdit une transmission complète des données **en ce qu'**il détruit au moins partiellement les données qu'il doit transmettre, **en ce qu'**il surscrit les données avec un signal de données dominant pour le système de bus.

2. Procédé selon la revendication 1,
**caractérisé en ce qu'**
on lance comme mesures à exécuter pour éviter la transmission des données, des mesures pour éviter que la transmission des données se fasse complètement par le système de bus.

3. Procédé selon la revendication 1,
**caractérisé en ce que**
la surveillance de la transmission des données se fait par comparaison des signes caractéristiques seulement pour des évènements prédéfinis, par au moins un participant autorisé.

4. Procédé selon la revendication 1,
**caractérisé en ce qu'**
on évite l'exécution des données à transmettre **en ce que** le participant autorisé caractérise les données à transmettre comme non valables, et
un participant recevant ces données les reconnaît comme non valables, et les rejette.

5. Procédé selon la revendication 1,
**caractérisé en ce que**
chaque participant est réalisé comme participant autorisé.

6. Dispositif pour surveiller un système de bus selon lequel :
le système de bus comprend au moins deux participants et parmi au moins ces deux participants, au moins un participant est un participant autorisé, et il surveille la transmission des données dans le système de bus,
des premiers moyens étant prévus pour transmettre un signe caractéristique à chaque transmission de données sur le système de bus,
le signe caractéristique pouvant être associé de manière univoque à un participant,
au moins un participant autorisé comporte des seconds moyens qui comparent le signe caractéristique à un signe prédéfini et en cas d'identité des deux signes caractéristiques il prend des mesures pour éviter l'exécution des données à transmettre si la transmission des données a été initiée par au moins un autre participant autorisé,
**caractérisé en ce que**
le premier participant autorisé est réalisé de façon à éviter une transmission complète des données **en ce qu'**il peut détruire au moins partiellement les données qu'il doit transmettre en surscrivant les données avec un signal de données dominant dans le signal de bus.

7. Système de bus comportant des moyens de surveillance pour surveiller le système de bus,
le système de bus comportant au moins deux participants et parmi au moins ces deux participants, il y a au moins un participant réalisé comme participant autorisé et il surveille la transmission des données par le système de bus,
des premiers moyens étant prévus pour transmettre un signe caractéristique à chaque transmission de données par le système de bus,
le signe caractéristique pouvant être associé de manière univoque à un participant,
au moins un participant autorisé comportant des seconds moyens qui comparent le signe caractéristique à un signe prédéfini et en cas d'identité entre les deux signes caractéristiques, il prend des mesures pour éviter l'exécution des données à transmettre si la transmission des données a été initiée par un participant autre qu'au moins un participant autorisé,
**caractérisé en ce que**
le premier participant autorisé est réalisé pour éviter une transmission complète des données **en ce qu'**il peut détruire au moins partiellement les données qu'il doit transmettre en surscrivant les données par un signal de données dominant dans le système de bus.

8. Procédé ou dispositif selon la revendication 1 ou 6 ou 7,
**caractérisé en ce que**
le système de bus est un système de bus LIN, et le premier participant autorisé est le participant maître.

9. Procédé ou dispositif selon la revendication 8,
**caractérisé en ce que**
comme signe caractéristique, on utilise un signal de bit de synchronisation (SynchBreak) d'un participant réalisé comme participant maître LIN,
ce participant réalisé comme maître LIN est un participant autorisé.

10. Procédé ou dispositif selon la revendication 1 ou 6 ou 7,
**caractérisé en ce que**
le système de bus est un système de bus CAN et chaque participant transmet un signe caractéristique d'identification avant une transmission de données et à chaque participant est associé au moins un signe caractéristique d'identification, et
au moins un participant autorisé compare au moins un signe caractéristique d'identification qui lui est associé, au signe caractéristique d'identification transmis par le système de bus.

11. Procédé ou dispositif selon la revendication 1 ou 6 ou 7,
**caractérisé en ce que**
le système de bus est un système correspondant à l'interface dite synchrone (BSS).

12. Procédé ou dispositif selon la revendication 8 ou 11,
**caractérisé en ce que**
comme signe caractéristique on utilise au moins un signal de bit de synchronisation d'un participant réalisé comme maître,
ce participant réalisé comme maître étant un participant autorisé.
